Europäisches Patentamt

European Patent Office

Office européen des brevets

(19)

(11) Publication number: **0 488 032 A2**

# EUROPEAN PATENT APPLICATION

(12)

(21) Application number: **91119754.9**

(22) Date of filing: **19.11.91**

(51) Int. Cl.⁵: **G06K 7/14**

(30) Priority: **27.11.90 JP 328692/90**

(43) Date of publication of application:
**03.06.92 Bulletin 92/23**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Suzuki, Tomoko**
**1-11-10, Sugebanba, Tama-ku**
**Kawasaki(JP)**
Inventor: **Nakajima, Masato**
**4-4, Mita, Tama-ku**
**Kawasaki(JP)**

(74) Representative: **Pellmann, Hans-Bernd,**
**Dipl.-Ing. et al**
**Patentanwaltsbüro**
**Tiedtke-Bühling-Kinne-Grupe-Pellmann-Grams, Bavariaring 4**
**W-8000 München 2(DE)**

(54) **Bar code system.**

(57) A bar code system includes a bar code label and a bar code reader. The bar code label has a bar code symbol represented by a background and stripes of at least two different types. The background and the stripes of the two different types provide different reflectivities respectively. The bar code reader applies light to the bar code label. A portion of the applied light is reflected at the bar code label, and the reflected portion of the light forms return light. The bar code reader receives the return light, and converts the return light into a corresponding electric signal. In the bar code reader, a level of the electric signal is compared with a plurality of predetermined different reference levels to detect contents of the bar code symbol.

*FIG. 6*

## BACKGROUND OF THE INVENTION

This invention relates to a bar code system which includes a bar code reader for extracting information from bar code labels.

Bar code systems include a bar code reader for extracting information from bar code labels. The bar code labels are generally attached to articles or products respectively. Each bar code label has a bar code symbol representing information for identifying the related article. In general, the bar code reader optically scans the bar code label to read out the information therefrom.

As will be explained later, a prior art bar code system has some problem.

## SUMMARY OF THE INVENTION

It is an object of this invention to provide an improved bar code system.

A first aspect of this invention provides a bar code system comprising a bar code label having a bar code symbol represented by a background and stripes of at least two different types, wherein the background and the stripes of the two different types provide different reflectivities respectively; means for applying light to the bar code label, wherein a portion of the applied light is reflected at the bar code label and the reflected portion of the light forms return light; means for converting the return light into a corresponding electric signal; and means for comparing a level of the electric signal with a plurality of predetermined different reference levels to detect contents of the bar code symbol.

A second aspect of this invention provides a bar code system comprising a bar code label with a bar code symbol having segments of first, second, and third types which correspond to different states of segments of information respectively, wherein each of the first-type segments of the bar code symbol has a part with a first predetermined color, each of the second-type segments of the bar code symbol has a part with a second predetermined color, and each of the third-type segments of the bar code symbol has a part with a third predetermined color, wherein the first, second, and third colors are different from each other and provide different reflectivities respectively; means for applying light to each segment of the bar code symbol, wherein the applied light is reflected by the segment of the bar code symbol at a rate which depends on a color of the part of the segment of the bar code symbol, and reflection-resultant light forms return light; means for converting the return light into a corresponding electric signal; means for detecting a level of the electric signal; and means for detecting which of the first, second, and third types each segment of the bar code symbol belongs to in response to the detected level of the electric signal.

A third aspect of this invention provides a bar code system comprising a bar code label with a bar code symbol having segments of first, second, third, and fourth types which correspond to different states of segments of information respectively, wherein each of the first-type segments of the bar code symbol has a part with a first predetermined color, each of the second-type segments of the bar code symbol has a part with a second predetermined color, each of the third-type segments of the bar code symbol has a part with a third predetermined color, and each of the fourth-type segments of the bar code symbol has a part with a fourth predetermined color, wherein the first, second, third, and fourth colors are different from each other and provide different reflectivities respectively; means for applying light to each segment of the bar code symbol, wherein the applied light is reflected by the segment of the bar code symbol at a rate which depends on a color of the part of the segment of the bar code symbol, and reflection-resultant light forms return light; means for converting the return light into a corresponding electric signal; means for detecting a level of the electric signal; and means for detecting which of the first, second, third, and fourth types each segment of the bar code symbol belongs to in response to the detected level of the electric signal.

## BRIEF DESCRIPTION OF THE DRAWINGS

Fig. 1 is a diagram of a bar code label and a transmitter section of a prior art bar code reader.

Fig. 2 is a diagram of a bar code label and a receiver section of the prior art bar code reader.

Fig. 3 is a diagram showing a portion of a prior art bar code symbol.

Fig. 4 is a diagram of a bar code label and a transmitter section of a bar code reader according to an embodiment of this invention.

Fig. 5 is a diagram of a bar code label and a receiver section of the bar code reader according to the embodiment of this invention.

Fig. 6 is a diagram showing a portion of a bar code symbol according to the embodiment of this invention.

Fig. 7 is a diagram showing the relation between reflectivity and colors with respect to light having a wavelength of 550 to 750 nm.

Fig. 8 is a flowchart of a program controlling the signal processor of Fig. 5.

## DESCRIPTION OF THE PRIOR ART

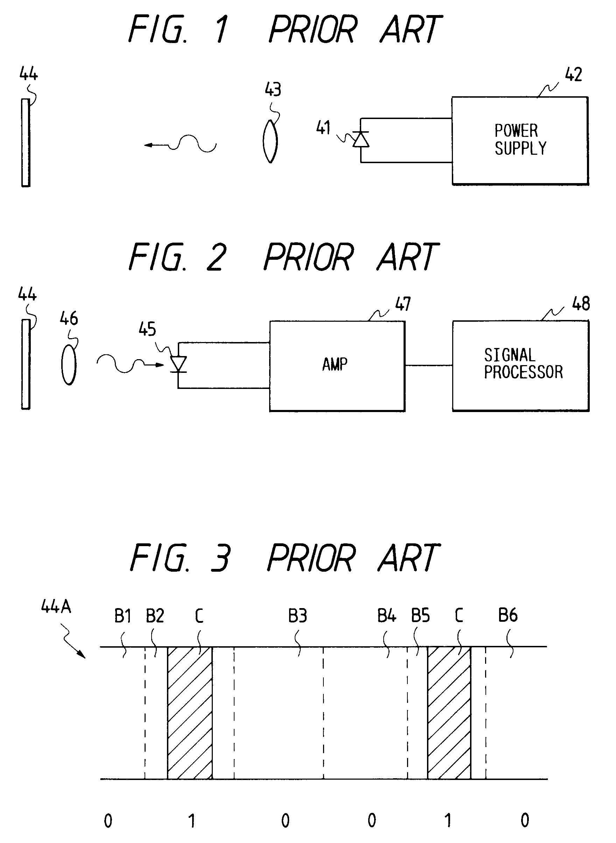

With reference to Fig. 1, a transmitter section of a prior art bar code reader includes a light-emitting element 41 such as a laser or a light-emitting diode, a power supply 42, and a lens 43. The light-emitting element 41 is driven by the power supply 42, emitting a beam of light. The emitted light beam passes through the lens 43, being applied to a bar code label 44 attached on an article.

As shown in Fig. 2, a receiver section of the prior art bar code reader includes a photodetector 45, a lens 46, an amplifier 47, and a signal processor 48. The light beam applied to the bar code label 44 from the transmitter section of the prior art bar code reader is reflected at the bar code label 44, forming a return light beam containing information represented by a bar code symbol on the bar code label 44. The return light beam passes through the lens 46, being applied to the photodetector 45. The return light beam is converted by the photodetector 45 into a corresponding electric signal which is fed to the signal processor 48 via the amplifier 47. The electric signal contains the bar code information. The signal processor 48 detects the amplitude of the input electric signal, deriving the bar code information from the input electric signal.

As shown in Fig. 3, the bar code symbol 44A on the bar code label 44 has an elongated region divided into a sequence of equal-size segments B1, B2, B3, ..., Bn. Each of the segments B1, B2, B3, ..., Bn can assume one of first and second states. In the first state, the segment has a black stripe C with a white background. In the second state, the segment has no black stripe and is fully occupied by a white background. The first and second states correspond to logic "1" and "0" respectively. In this way, each of the segments B1, B2, B3, ..., Bn represents 1-bit information.

The segments B1, B2, B3, ..., Bn of the bar code symbol 44A are sequentially scanned by the light beam. During the scanning process, a segment being in the first state (the "1" state), that is, a segment having a black stripe C, reflects the light beam at a low rate while a segment in the second state (the "0" state), that is, a segment fully occupied by a white background, reflects the light beam at a high rate. Thus, the intensity of the return light depends on the state of a segment, and the amplitude of the corresponding electric signal depends on the state of the segment. As described previously, the signal processor 48 detects the amplitude of the electric signal, deriving the bar code information from the electric signal.

When the bar code symbol 44A is required to represent a great amount of information, the bar code symbol 44A tends to be excessively long. In some cases, the bar code symbol 44A needs to include a parallel arrangement of elongated regions each having a sequence of equal-size segments. In these cases, the bar code reader tends to spend a long time to derive whole information from the bar code symbol 44A.

## DESCRIPTION OF THE PREFERRED EMBODIMENT

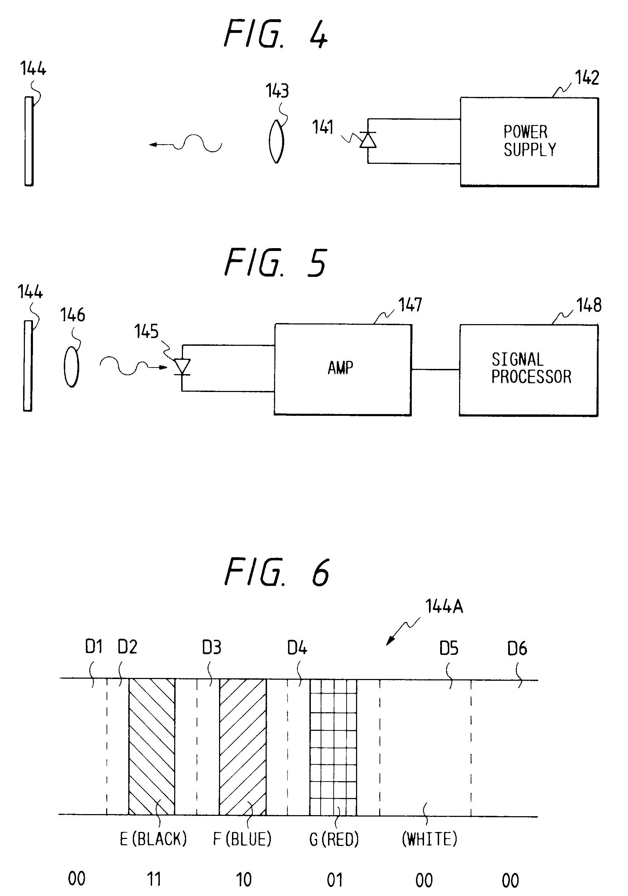

With reference to Fig. 4, a transmitter section of a bar code reader includes a light-emitting element 141 such as a laser or a light-emitting diode, a power supply 142, and a lens 143. The light-emitting element 141 is driven by the power supply 142, emitting a beam of light having a wavelength of, for example, about 640 nm. The emitted light beam passes through the lens 143, being applied to a bar code label 144 attached on an article.

As shown in Fig. 5, a receiver section of the bar code reader includes a photodetector 145, a lens 146, an amplifier 147, and a signal processor 148. The light beam applied to the bar code label 144 from the transmitter section of the bar code reader is reflected at the bar code label 144, forming a return light beam containing information represented by a bar code symbol on the bar code label 144. The return light beam passes through the lens 146, being applied to the photodetector 145. The return light beam is converted by the photodetector 145 into a corresponding electric signal which is fed to the signal processor 148 via the amplifier 147. The electric signal contains the bar code information. The signal processor 148 detects the amplitude or the level of the input electric signal, deriving the bar code information from the input electric signal.

As shown in Fig. 6, the bar code symbol 144A on the bar code label 144 has an elongated region divided into a sequence of equal-size segments D1, D2, D3, ..., Dn. Each of the segments D1, D2, D3, ..., Dn can assume one of first, second, third, and fourth states. In the first state, the segment has a black stripe E with a white background. In the second state, the segment has a blue stripe F with a white background. In the third state, the segment has a red stripe G with a white background. In the fourth state, the segment has no stripe and is fully occupied by a white background. The first, second, third, and fourth states correspond to logic "11", "10", "01", and "00" respectively. In this way, each of the segments D1, D2, D3, ..., Dn represents 2-bit information. Thus, the bar code label 144 generally has an information recording density twice the information recording density of the prior art bar code label of Figs. 1-3.

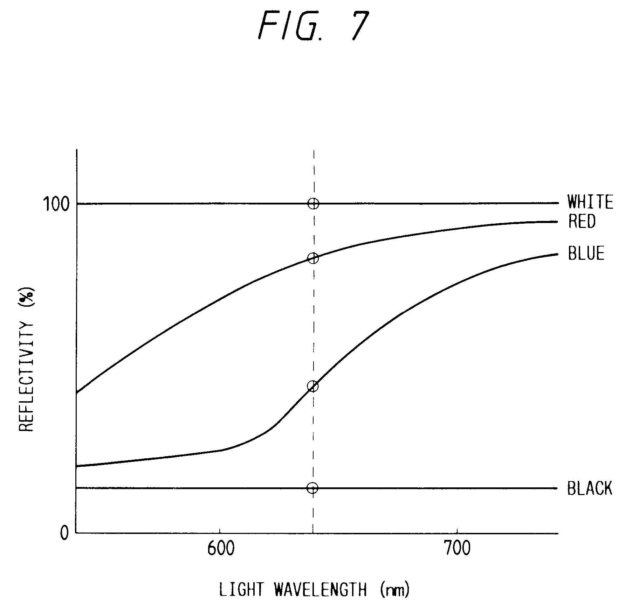

As shown in Fig. 7, black, blue, red, and white provide different reflectivities for light having a predetermined wavelength of, for example, about 640 nm. Specifically, black provides a lowest reflectivity. Blue provides a second lowest reflectivity. Red provides a second highest reflectivity. White provides a highest reflectivity.

The segments D1, D2, D3, ..., Dn of the bar code symbol 144A are sequentially scanned by the light beam. During the scanning process, a segment being in the first state (the "11" state), that is, a segment having a black stripe E, reflects the light beam at a lowest rate. A segment in the second state (the "10" state), that is, a segment having a blue stripe F, reflects the light beam at a second lowest rate. A segment in the third state (the "01" state), that is, a segment having a red stripe G, reflects the light beam at a second highest rate. A segment in the fourth state (the "00" state), that is, a segment fully occupied by a white background, reflects the light beam at a highest rate. Thus, the intensity of the return light depends on the state of a segment, and the amplitude or the level of the corresponding electric signal depends on the state of the segment. As described previously, the signal processor 148 detects the amplitude or the level of the electric signal, deriving the bar code information from the electric signal.

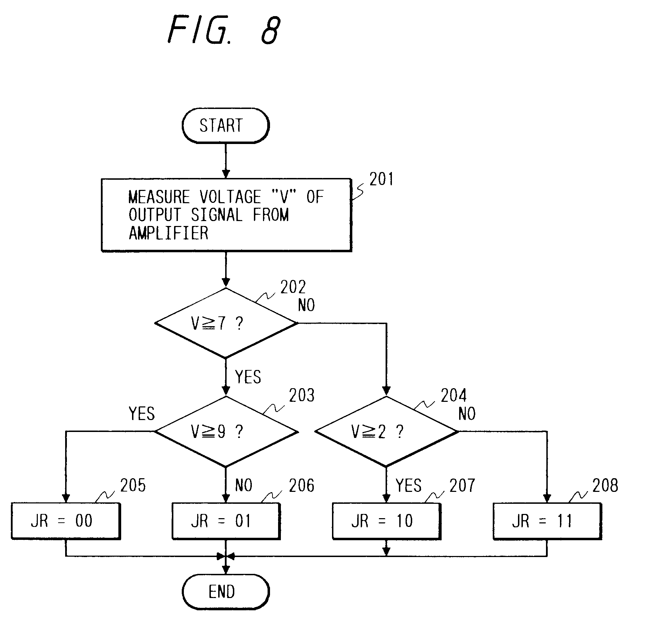

The signal processor 148 includes a combination of a processing section, a ROM, a RAM, and an input/output section. The input/output section converts the output signal from the amplifier 147 into a corresponding digital signal which is processed by the processing section. The signal processor 148 operates in accordance with a program stored in the ROM. Fig. 8 is a flowchart of a portion of the program.

The program will be described. In the following description of the program, digital values are expressed as analog values for an easy understanding. As shown in Fig. 8, a first step 201 of the program measures the present voltage V of the output signal from the amplifier 147. A step 202 following the step 201 compares the present voltage V with a predetermined reference voltage, for example, 7 volts. When the present voltage V is equal to or higher than 7 volts, the program advances to a step 203. When the present voltage V is lower than 7 volts, the program advances to a step 204. The step 203 compares the present voltage V with a predetermined reference voltage, for example, 9 volts. When the present voltage V is equal to or higher than 9 volts, the program advances to a step 205. When the present voltage V is lower than 9 volts, the program advances to a step 206. The step 204 compares the present voltage V with a predetermined reference voltage, for example, 2 volts. When the present voltage V is equal to or higher than 2 volts, the program advances to a step 207. When the present voltage V is lower than 2 volts, the program advances to a step 208. The step 205 sets a judgment result JR to "00". The step 206 sets the judgment result JR to "01". The step 207 sets the judgement result JR to "10". The step 208 sets the judgement result JR to "11". The judgment result JR represents the derived bar code information. The judgment result JR will be used in later processing, or will be outputted from the signal processor 148. The sequence of the steps 201-208 is executed for each of the segments D1, D2, D3, ..., Dn of the bar code symbol 144A.

A bar code system includes a bar code label and a bar code reader. The bar code label has a bar code symbol represented by a background and stripes of at least two different types. The background and the stripes of the two different types provide different reflectivities respectively. The bar code reader applies light to the bar code label. A portion of the applied light is reflected at the bar code label, and the reflected portion of the light forms return light. The bar code reader receives the return light, and converts the return light into a corresponding electric signal. In the bar code reader, a level of the electric signal is compared with a plurality of predetermined different reference levels to detect contents of the bar code symbol.

## Claims

1.   A bar code system comprising:
a bar code label having a bar code symbol represented by a background and stripes of at least two different types, wherein the background and the stripes of the two different types provide different reflectivities respectively;
means for applying light to the bar code label, wherein a portion of the applied light is reflected at the bar code label and the reflected portion of the light forms return light;
means for converting the return light into a corresponding electric signal; and
means for comparing a level of the electric signal with a plurality of predetermined different reference levels to detect contents of the bar code symbol.

2.   A bar code system comprising:
a bar code label with a bar code symbol having segments of first, second, and third types which correspond to different states of segments of information respectively, wherein each of the first-type segments of the bar code symbol has a part with a first predetermined color, each of the second-type segments of the bar code symbol has a part with a second predetermined color, and each of the third-type segments of the bar code symbol has a part with a third predetermined color, wherein the first, second, and third colors are different from each other and provide different reflectivities respectively;

means for applying light to each segment of the bar code symbol, wherein the applied light is reflected by the segment of the bar code symbol at a rate which depends on a color of the part of the segment of the bar code symbol, and reflection-resultant light forms return light;

means for converting the return light into a corresponding electric signal;

means for detecting a level of the electric signal; and

means for detecting which of the first, second, and third types each segment of the bar code symbol belongs to in response to the detected level of the electric signal.

3. A bar code system comprising:

a bar code label with a bar code symbol having segments of first, second, third, and fourth types which correspond to different states of segments of information respectively, wherein each of the first-type segments of the bar code symbol has a part with a first predetermined color, each of the second-type segments of the bar code symbol has a part with a second predetermined color, each of the third-type segments of the bar code symbol has a part with a third predetermined color, and each of the fourth-type segments of the bar code symbol has a part with a fourth predetermined color, wherein the first, second, third, and fourth colors are different from each other and provide different reflectivities respectively;

means for applying light to each segment of the bar code symbol, wherein the applied light is reflected by the segment of the bar code symbol at a rate which depends on a color of the part of the segment of the bar code symbol, and reflection-resultant light forms return light;

means for converting the return light into a corresponding electric signal;

means for detecting a level of the electric signal; and

means for detecting which of the first, second, third, and fourth types each segment of the bar code symbol belongs to in response to the detected level of the electric signal.

4. The bar code system of claim 3 wherein the first, second, third, and fourth colors agree with black, blue, red, and white respectively.

## FIG. 1 PRIOR ART

## FIG. 2 PRIOR ART

## FIG. 3 PRIOR ART

## FIG. 4

144

143

141

142

POWER
SUPPLY

## FIG. 5

144

146

145

147

AMP

148

SIGNAL
PROCESSOR

## FIG. 6

144A

| D1 | D2 | D3 | D4 | D5 | D6 |

E (BLACK)    F (BLUE)    G (RED)    (WHITE)

00      11      10      01      00      00

# FIG. 7

# FIG. 8

START

MEASURE VOLTAGE "V" OF OUTPUT SIGNAL FROM AMPLIFIER — 201

V ≥ 7 ? — 202
NO

YES

V ≥ 9 ? — 203
YES

V ≥ 2 ? — 204
NO

JR = 00 — 205
JR = 01 — 206
NO
JR = 10 — 207
YES
JR = 11 — 208

END